**Europäisches Patentamt**

**European Patent Office**

**Office européen des brevets**

(11) Numéro de publication : **0 375 498 B1**

(12) **FASCICULE DE BREVET EUROPEEN**

(45) Date de publication du fascicule du brevet :
**15.07.92 Bulletin 92/29**

(51) Int. Cl.$^5$ : **G01V 1/20, B06B 1/06**

(21) Numéro de dépôt : **89403406.5**

(22) Date de dépôt : **08.12.89**

(54) **Antenne hydrophonique linéaire modulaire directionnelle.**

(30) Priorité : **20.12.88 FR 8816803**

(43) Date de publication de la demande :
**27.06.90 Bulletin 90/26**

(45) Mention de la délivrance du brevet :
**15.07.92 Bulletin 92/29**

(84) Etats contractants désignés :
**DE FR GB IT**

(56) Documents cités :
**EP-A- 0 264 323**
**DE-A- 3 316 850**
**GB-A- 2 063 007**
**US-A- 4 789 968**
**US-A- 4 837 751**

(73) Titulaire : **THOMSON-CSF**
**51, Esplanade du Général de Gaulle**
**F-92800 Puteaux (FR)**

(72) Inventeur : **Dumaine, Bruno**
**THOMSON-CSF SCPI Cédex 67**
**F-92045 Paris la Défense (FR)**
Inventeur : **Roman, Gilbert**
**THOMSON-CSF SCPI Cédex 67**
**F-92045 Paris la Défense (FR)**
Inventeur : **Ramoger, François**
**THOMSON-CSF SCPI Cédex 67**
**F-92045 Paris la Défense (FR)**
Inventeur : **Bertrand, Guy**
**THOMSON-CSF SCPI Cédex 67**
**F-92045 Paris la Défense (FR)**

(74) Mandataire : **Desperrier, Jean-Louis et al**
**THOMSON-CSF SCPI**
**F-92045 PARIS LA DEFENSE CEDEX 67 (FR)**

## Description

Le domaine de l'invention est celui des antennes hydrophoniques, plus particulièrement destinées à la détection de cibles.

Il est bien connu que la directivité d'une antenne linéaire composée d'hydrophones omnidirectionnels est omnidirectionnelle dans le plan perpendiculaire à l'axe de l'antenne. En particulier, il n'est pas possible de déterminer si une cible est située à droite ou à gauche de l'antenne.

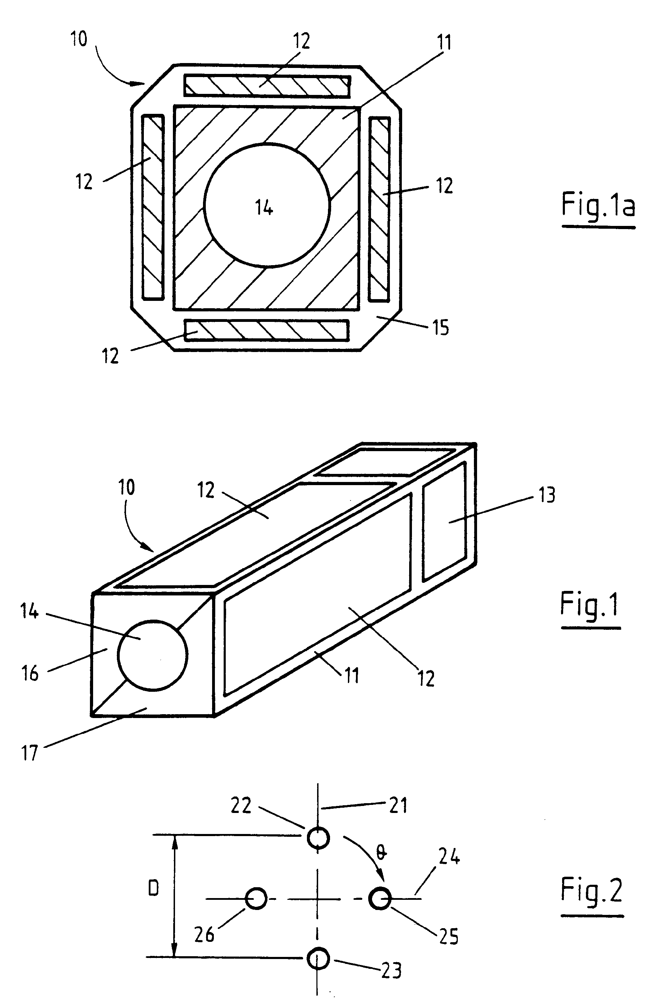

Toutefois, on sait obtenir une directivité en concevant une antenne à partir de deux dipôles orthogonaux. Comme représenté en Fig. 2, si D est la distance séparant les deux capteurs 22, 23 et 25, 26, de chaque dipôle 21 et 24, la fonction de directivité est

$2 \sin \left( \dfrac{\P D}{\lambda} \sin \theta \right)$ pour un des dipôles et $2 \sin \left( \dfrac{\P D}{\lambda} \cos \theta \right)$

pour l'autre dipôle, $\theta$ représentant la direction. Si la longueur d'onde n'est pas trop grande devant D, on trouve la direction par $\tan\theta$.

Il est avantageux de réaliser une antenne comportant au moins un module directif fonctionnant sur ce principe.

Or, dans le cas où l'on souhaite pouvoir obtenir une directivité horizontale et/ou verticale, par exemple, il est nécessaire de disposer de plusieurs hydrophones alignés dont les signaux sont combinés. Dans ce cas, on se heurte à la difficulté de calage des modules directifs les uns par rapport aux autres.

Il existe un système d'exploration sismique, décrit dans le brevet US 4 789 968, pouvant être remorqué par un bateau et permettant la détection sélective d'ondes provenant d'une direction particulière et tel que l'angle d'incidence et l'amplitude des ondes détectées peuvent être déterminés. Ce dispositif comporte des hydrophones constitués de dipôles orthogonaux composés d'éléments semi-cylindriques en cristal piezoélectrique , les hydrophones étant disposés le long d'un cylindre. Un tel système permet de déterminer la direction des ondes de compression et des ondes de cisaillement détectées en mesurant leur vitesse à travers un terrain à analyser. Ce dispositif est essentiellement destiné à effectuer des sondages dans un terrain, mais n'est pas adapté à la détection d'ondes acoustiques provenant d'une cible immergée.

L'invention concerne une antenne hydrophonique particulièrement adaptée à la détection de cibles immergées, comportant au moins un module directif permettant de déterminer la direction des sources d'ondes captées, cette direction étant obtenue en utilisant des capteurs hydrophoniques disposés sur un support et mesurant des gradients de pression. Dans ce cas, il faut éliminer des signaux parasites provenant de la vibration du support sous l'effort des pressions acoustiques.

Selon l'invention, une antenne hydrophonique linéaire du type constituée d'une pluralité de capteurs hydrophoniques omnidirectionnels comportant au moins un module d'antenne directif dans lequel deux paires de capteurs hydrophoniques forment deux dipôles orthogonaux, ce module étant associé à des moyens d'identification de la direction des sources d'ondes captées est caractérisée en ce que les capteurs hydrophoniques sont des capteurs surfaciques de pression disposés sur un support transparent aux ondes acoustiques par l'intermédiaire d'un interface en matériau viscoélastique.

De façon avantageuse, chaque module comporte 4 capteurs surfaciques de pression en PVDF montés sur un support en mousse syntactique et enrobés dans un surmoulage en polyuréthane.

L'invention concerne également une antenne hydrophonique comportant un ensemble de modules hydrophoniques ayant tous la même référence d'angle, pour une utilisation en flûte d'écoute. Dans ce cas, il faut en effet limiter la rotation de la flûte autour de son axe (par exemple $\pm$ 2°). En même temps, il faut conserver un pas constant entre hydrophones pour garantir la formation de voies directives, tout en gardant l'antenne flexible pour autoriser son enroulement, et rigide pour la navigation. De plus, il faut ménager un passage d'un module à l'autre pour le cablage électrique.

Selon une autre caractéristique particulière de l'invention, l'articulation entre modules directifs est constituée par un tube annelé traversé par un toron de câbles électriques comportant un jonc central.

D'autres caractéristiques et avantages de l'invention apparaîtront dans les dessins annexés dans lesquels :

– la Fig. 1 représente une vue schématisée en perspective d'un module directif d'antenne hydrophonique selon l'invention ;

– la Fig. 1a est une coupe en section transversale du module de la Fig. 1 ;

– la Fig. 2 illustre le principe d'utilisation des deux dipôles orthogonaux pour le relevé de direction d'une source d'ondes captées ;

– la Fig. 3 schématise un mode de polarisation d'un capteur surfacique bilame utilisé dans un module d'antenne de l'invention ;

– la Fig. 4 schématise l'élément de liaison de deux modules directifs de l'antenne de l'invention.

Comme représenté en Fig. 1, chaque module hydrophonique 10 est constitué par un support 11, avantageusement parallélépipédique à section carrée, réalisé dans un matériau rigide transparent aux ondes acoustiques (c'est-à-dire dont le produit densité-vitesse est proche de celui de l'eau). Ce matériau qui doit pouvoir être usiné facilement est avantageusement constitué d'une mousse syntactique.

Sur les quatre faces latérales du support sont placés quatre capteurs surfaciques "bilames" 12 en polymère piézoélectrique dont l'épaisseur ne dépasse avantageusement pas 2 à 3mm.

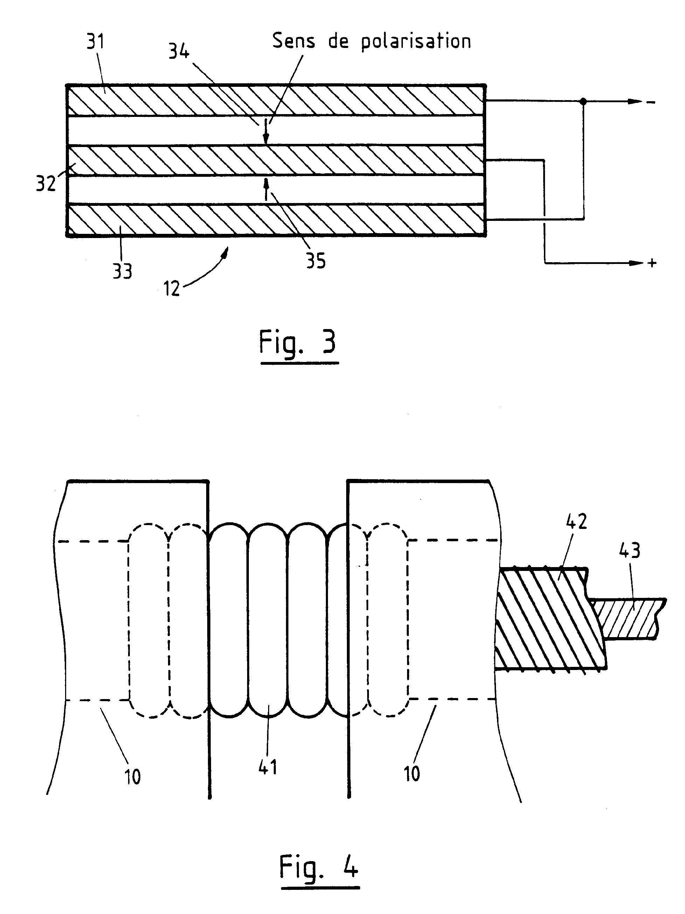

Comme représenté en Fig. 3, chaque capteur est avantageusement constitué de trois électrodes métalliques 31, 32, 33, polarisées selon les sens indiqués par les flèches 34, 35. Les électrodes sont espacées par deux couches intermédiaires en PVDF (Polyfluorure de vinylidène).

Un logement 13 est réservé pour l'électronique. Le support 11 est évidé au centre 14 (Fig. 1a) pour permettre le passage des connexions et le maintien des articulations intermodules 41.

Lorsque les capteurs surfaciques 12 sont directement disposés sur le support 11, des signaux parasites, provenant de la déformation du support qui vibre sous l'effort des pressions acoustiques, perturbent le fonctionnement des capteurs 12. Pour éliminer ces signaux parasites, les capteurs surfaciques 12 sont isolés du support 11 par un interface 15 en matériau viscoélastique, par exemple du polyuréthane, qui constitue également avantageusement un surmoulage de l'ensemble.

Comme illustré en Fig. 4, l'articulation entre modules est préférentiellement réalisée au moyen d'un élément tubulaire annelé 41 en matière plastique présentant une résistance à la torsion élevée. Le toron 42 de câbles de connexions électriques comporte un jonc 43 en fibre de carbone ou de verre qui procure de la rigidité à la flexion et qui s'étend sur toute la longueur de l'antenne. Un tel jonc 43 garantit ainsi l'absence d'ondulations lors de la navigation de l'antenne.

Le support 10 est avantageusement fabriqué en deux parties longitudinales sensiblement symétriques, l'évidement central 14 étant cannelé à chaque extrémité destinée à être reliée à un autre module, afin d'y coller les anneaux de l'articulation 41. On obtient ainsi une tenue en traction élevée.

Le "chapelet" de modules ainsi réalisé est avantageusement mis en place dans une gaine remplie d'huile isolante comme il est connu dans les flûtes d'écoute passive.

A titre d'exemple, on a réalisé une telle antenne comportant 32 modules espacés de 112mm fonctionnant dans une bande de fréquences située autour de 3,5 kHz. La torsion intermodule constatée s'est limitée à ± 2° au maximum.

L'invention n'est pas limitée aux exemples de réalisation précisément décrits, notamment le support 11 peut avoir une géométrie différente d'un parallélépipède, la géométrie peut être par exemple cylindrique ou autre, à condition de conformer le matériau en polymère piezoélectrique à la géométrie utilisée.

## Revendications

1. Antenne hydrophonique linéaire du type constituée d'une pluralité de capteurs hydrophoniques omnidirectionnels comportant au moins un module d'antenne directif (10) dans lequel deux paires (21, 24) de capteurs hydrophoniques (22, 23, 25, 26) forment deux dipôles orthogonaux (21, 24), ce module (10) étant associé à des moyens d'identification de la direction des sources d'ondes captées, caractérisée en ce que les capteurs hydrophoniques sont des capteurs surfaciques de pression disposés sur un support (11) transparent aux ondes acoustiques, par l'intermédiaire d'un interface (15) en matériau viscoélastique.

2. Antenne selon la revendication 1, caractérisée en ce que le support (11) est un support parallélépipédique portant un capteur hydrophonique (12) sur chacune de ses faces latérales.

3. Antenne selon la revendication 1, caractérisée en ce que les capteurs surfaciques de pression (12) sont des bilames en PVDF.

4. Antenne selon la revendication 2, caractérisée en ce que le support parallélépipédique (11) est enrobé de mousse syntactique.

5. Antenne selon l'une quelconque des revendications de 1 à 4, caractérisée en ce que le module (10) est enrobé dans un surmoulage en polyuréthane.

6. Antenne selon la revendication 1 du type comportant au moins deux modules (10) directifs superposés, caractérisée en ce qu'elle comporte des moyens de liaison (41) des modules (10) constitués par un élément tubulaire annelé à résistance élevé à la torsion, solidaire du support (11) de chacun des modules adjacents (10).

7. Antenne selon la revendication 6, caractérisée en ce que l'élément tubulaire (41) est traversé par un toron (42) de câbles électriques de connexion des modules.

8. Antenne selon la revendication 6, caractérisée en ce que l'élément tubulaire est traversé par un jonc (43) de rigidification en flexion de la liaison, constitué en matière telle que de la fibre de carbone ou de verre.

9. Antenne selon la revendication 6, caractérisée en ce que le support parallélépipédique (11) est constitué en deux parties longitudinales (16, 17) sensiblement symétriques collées, munies extérieurement de cannelures de réception de l'élément tubulaire de liaison (41) à au moins une de leurs extrémités.

## Patentansprüche

1. Lineare hydrophonische Antenne des Typs, der mit einer Mehrzahl von hydrophonischen Allrichtungsmeßwertaufnehmern versehen ist, die wenigstens einen Richtantennenmodul (10) aufweist, in dem zwei Paare (21, 24) von hydrophonischen Meßwertaufnehmern (22, 23, 25, 26) zwei orthogonale Dipole (21, 24) bilden, wobei dieser Modul (10) mit Mitteln für die Identifikation der Richtung der Quellen der aufgenommenen Wellen verbunden ist, dadurch gekennzeichnet, daß die hydrophonischen Meßwert-aufnehmer oberflächenhafte Druck-Meßwertaufneh-mer sind, die unter Einfügung einer Zwischenschicht aus viskoelastischem Material auf einem für Schallwellen durchlässigen Träger (11) angeordnet sind.

2. Antenne gemäß Anspruch 1, dadurch gekennzeichnet, daß der Träger (11) ein Träger in Form eines Parallelflachs ist, der auf jeder seiner Seitenflächen einen hydrophonischen Meßwertaufnehmer (12) trägt.

3. Antenne gemäß Anspruch 1, dadurch gekennzeichnet, daß die oberflächenhaften Druck-Meßwertaufnehmer (12) Bimetalle aus PVDF sind.

4. Antenne gemäß Anspruch 2, dadurch gekennzeichnet, daß der Träger in Form eines Parallelflachs (11) mit syntaktischem Schaumstoff umhüllt ist.

5. Antenne gemäß einem der Ansprüche 1 bis 4, dadurch gekennzeichnet, daß der Modul (10) durch Formung mit Polyurethan umhüllt ist.

6. Antenne gemäß Anspruch 1 eines Typs, der mit wenigstens zwei überlagerten Richtmodulen (10) versehen ist, dadurch gekennzeichnet, daß sie Mittel für die Verbindung (41) der Module (10) aufweist, die von einem gewellten rohrförmigen Element mit erhöhtem Torsionswiderstand gebildet sind, das mit dem Träger (11) eines jeden der benachbarten Module (10) verbunden ist.

7. Antenne gemäß Anspruch 6, dadurch gekennzeichnet, daß durch das röhrenförmige Element ein Strang (42) von elektrischen Verbindungsleitungen für die Module hindurchgeht.

8. Antenne gemäß Anspruch 6, dadurch gekennzeichnet, daß durch das rohrförmige Element eine Stange (43) für die Versteifung hinsichtlich der Biegsamkeit der Verbindung hindurchgeht, die aus einem Material wie einer Kohlenstoff- oder Glasfaser gebildet ist.

9. Antenne gemäß Anspruch 6, dadurch gekennzeichnet, daß der Träger in Form eines Parallelflachs (11) aus zwei im wesentlichen symmetrisch verklebten länglichen Teilen (16, 17) gebildet ist, die an wenigstens einem ihrer Enden an der Außenseite mit Rillen für die Aufnahme des rohrförmigen Verbin-dungselementes (41) versehen sind.

dipoles (21, 24), said module (10) being associated with means for the identification of the direction of the sources of the sensed waves, characterized in that the hydrophonic sensors are surface pressure sensors arranged on a support (11) which is transparent to sound waves, by the intermediary of an interface (15) of viscoelastic material.

2. The antenna as claimed in claim 1, characterized in that the support (11) is a support having the form of a parallelepiped bearing a hydrophonic sensor (12) on each of its lateral surfaces.

3. The antenna as claimed in claim 1, characterized in that the surface pressure sensors (12) are bimetallic elements of PVDF.

4. The antenna as claimed in claim 2, characterized in that the support having the form of a parallelepiped (11) is encased in a syntactic foam material.

5. The antenna as claimed in any one of the preceding claims 1 through 4, characterized in that the module (10) is encased in polyurethane molded on it.

6. The antenna as claimed in claim 1 of the type comprising at least two superposed directional modules (10), characterized in that it comprises connection means (41) for the modules (10) constituted by a corrugated tubular element with an enhanced resistance to torsion and secured to the support (11) of each of the adjacent modules (10).

7. The antenna as claimed in claim 6, characterized in that the tubular element (41) is traversed by a strand (42) of electrical cables for the connection of the modules.

8. The antenna as claimed in claim 6, characterized in that the tubular element is traversed by a rib (43) for stiffening the connection as regards bending, and constituted by a material such as carbon or glass fiber.

9. The antenna as claimed in claim 6, characterized in that the support (11) having the form of a parallelepiped is constituted in the form of two longitudinal parts (16 and 17) which are bonded so as to be substantially symmetrical and are externally provided with grooves for receiving the tubular connecting element (41) at at least one of the ends thereof.

## Claims

1. A linear hydrophonic antenna of the type constituted by a plurality of hydrophonic omnidirectional sensors comprising at least one directional antenna module (10) in which two pairs (21, 24) of hydrophonic sensors (22, 23, 25, 26) constitute two right angled

Fig.1a

Fig.1

Fig.2

Sens de polarisation

## Fig. 3

## Fig. 4